# EUROPEAN PATENT SPECIFICATION

(11) **EP 3 430 358 B1**
(45) Date of publication and mention of the grant of the patent: **09.08.2023**
(21) Application number: 16711801.7
(22) Date of filing: 16.03.2016
(51) Int. Cl.: G01D 3/08

(54) **ARRANGEMENT AND METHOD FOR DETERMINING A MEASUREMENT VALUE FOR A POWER CABLE**
ANORDNUNG UND VERFAHREN ZUR BESTIMMUNG EINER MESSWERT FÜR EIN STROMKABEL
DISPOSITIF ET PROCÉDÉ POUR DÉTERMINER UNE VALEUR DE MESURE POUR UN CÂBLE D'ALIMENTATION

(43) Date of publication of application: 23.01.2019
(73) Proprietor: Hochschule für Technik und Wirtschaft Berlin, 10318 Berlin (DE)
(72) Inventor: GRÄF, Thomas, 12621 Berlin (DE)
(74) Representative: Bittner, Thomas L.
(86) International application number: PCT/EP2016/055678
(87) International publication number: WO 2017/157431

(56) References cited:
- WO-A1-2015/035568
- CN-A- 103 575 415
- DE-A1-102014 101 156
- FR-A1- 2 997 508
- US-A1- 2011 125 417

## Description

The disclosure relates to an arrangement and a method for determining a measurement value for a power cable.

### Background

Cables, in particular power cables, can degrade over time. In particular, temperature has a significant influence on the properties of a cable. Thus, monitoring a thermal condition of the cable is desirable.

It is known to measure a temperature of the cable on the surface of the cable. With a thermal model of the cable, conditions in the cable may be estimated from the surface measured values. For example, a temperature of an inner conductor may be computed.

Alternatively, a fiber optic cable can be inserted in the cable to determine properties of the cable. A polarization of laser light coupled in the fiber optic cable changes with temperature. This approach is expensive. Further, the fiber optic sensor can be a kind of impurity in the power cable which may cause a partial discharge.

Document DE 10 2014 101 156 A1 discloses a device for determining a measurement value of an electrical site. The device comprises a measurement sensor which is coupled to a thermo-electrical generator. Measurement values are transmitted to a receiver by a transmitting unit. The device can be arranged on a cable.

Document WO 2017/0157431 A1 pertains to a system for monitoring a temperature of an electrical conductor of an electrical cable and including a temperature sensor unit and a transceiver unit. The temperature sensor unit is located inside the first conductive layer and includes a micro-controller, a temperature sensor, an energy harvest sub-unit and a wireless transmitter.

Document FR 2 997 508 A1 discloses a cable with an inner functional core, an outer protective sheath, and sensor elements. Each sensor element is intended to perform a measurement of a health parameter, e.g. temperature, of the cable in a respective elementary area, where the sensor elements are intended to communicate with each other. The sensor elements are connected by a communication link that extends along the length of the cable.

Document US 2011/0125417 A1 pertains to a self-sufficient structural health monitoring system that can monitor a structure without need for external power input. The structural health monitoring system is provided with a power supply integrated within, so that the system relies on itself for operational power.

In the document CN 103 575 415 A, an on-line temperature monitoring system and a method for intermediate joints of a buried cable are described. The monitoring system is composed of wireless sensor nodes, thermo-electric generators (TEGs), a wireless temperature measurement concentrator and a monitor center. The intermediate joints of the buried cable are located below cable work wells. The wireless sensor nodes and the TEGs are installed on the outer surfaces of the intermediate joints of the buried cable. The wireless temperature measurement concentrator is installed in a switching station or a ring main unit or a cable branch box at a cable terminal or a branch joint. An antenna of the wireless temperature measurement concentrator extends into a cable channel to collect monitor data of the wireless sensor nodes and send the monitor data to the monitor center through a GPRS or an optical fiber. The TEGs and an energy collector are adopted to convert temperature difference into electric energy to be supplied for a wireless sensor, and at the same time, the monitor data are collected in a wireless mode and the wireless sensor nodes work in a low-power dissipation mode.

### Summary

It is an object to provide improved technologies for monitoring power cables.

An arrangement according to claim 1 and a method according to claim 9 are provided. Further embodiments are subject matter of dependent claims.

By integrating the measurement system in the power cable, accuracy of the measurement value is increased.

The sensor can be adapted to determine a measurement value of the following types of measurement values: temperature, humidity, gas pressure, gas and light radiation. The sensor can be formed as temperature sensor, humidity sensor, gas pressure sensor, gas sensor and / or light sensor. The measurement system may comprise several sensors, wherein each sensor can be adapted to determine one of the before mentioned measurements values. Several sensors may be coupled with each other.

The energy harvesting unit is used to supply electrical power to the components of the measurement system, in particular to the sensor(s) and the transmitting unit. The energy harvesting unit may be adapted to convert thermal energy in electrical energy (so-called thermo-electrical generator). The energy harvesting unit may comprise two different metals using the Seebeck effect to generate electrical energy. Alternatively, the energy harvesting unit may comprise two different semiconducting materials using the Peltier effect. A temperature difference between the two materials of several Kelvin (K) is sufficient to generate a thermo voltage of several millivolt (mV). The energy harvesting unit may be adapted to sense temperatures in the range from -30 °C to 140 °C. The energy harvesting unit may be adapted to generate an electrical voltage in the range from 2 mV to 1,5 V or more. In other embodiments, the energy harvesting unit can be adapted to convert magnetic field energy and / or electrical field energy to electrical energy.

The measurement system may comprise several energy harvesting units. Several energy harvesting units may be operated in parallel configuration or in series.

The measurement system may further comprise a DC-DC converter (also called DC-DC booster). The DC-DC converter can be adapted to transform a small input voltage (e.g. some mV) to a high output voltage (e.g. 1,5 V). A resistor may be coupled to the DC-DC converter in order to limit the input voltage.

The transmitting unit may be adapted to transmit the measurement value with a frequency of more than 100 MHz, e.g. 305 MHz, 868 MHz, 902 MHz or 2,4 GHz. The transmitting unit may be a radio module of the company EnOcean. The transmitting unit may be adapted to encrypt the measurement value prior to its transmission.

The measurement system may comprise a processor, which may be adapted to convert the measurement value in a digital value prior to the transmission. The processor may also be coupled to the energy harvesting unit for power supply.

The power cable comprises a conductor which is surrounded by a shield, and the conductor and the shield are surrounded by a jacket. The jacket may be some millimeters up to several centimeters thick, e.g. 8 mm, 2 cm, 3 cm or 5 cm.

The measurement system may be arranged between the shield and an outer surface of the jacket. The measurement system may be arranged directly on the shield. The measurement system may be arranged such that an outer surface of the measurement system finishes with the outer surface of the jacket. In one embodiment, the measurement system may be arranged directly on the shield extending through the jacket such that the outer surface of the measurement system finishes with the outer surface of the jacket.

The measurement system comprises a base plate on which the energy harvesting unit, the sensor and the transmitting unit are arranged. The measurement system further comprises a heat conductor which is arranged above the base plate. The heat conductor may be connected to the base plate. The heat conductor may be made of a metal or a metallic alloy. The energy harvesting unit may be arranged on the base plate and connected to the heat conductor such that a temperature difference between the base plate and the heat conductor can be converted to electrical energy.

The measurement system may be molded in the jacket of the power cable.

The measurement system may be arranged between the conductor and the shield, e.g. the measurement system may be arranged directly on the conductor.

The measurement system may be arranged in the conductor, e.g. the measurement system may be arranged directly in the conductor.

The measurement system may be surrounded by a closed housing. The housing may surround all components of the measurement system. The housing may be made of a metal, e.g. aluminum or copper, or of a thermally conductive plastic. The housing may be fluid tight, e.g. according to IP class 68 or higher. The housing may be corrosion-resistant.

The features disclosed in context with the arrangement are also applicable for the method and vice versa.

### Description of embodiments

Following, exemplary embodiments are described. Here show:
Fig. 1 a schematic representation of a measurement system,
Fig. 2 a schematic representation of another measurement system,
Fig. 3 a schematic representation of a power cable,
Fig. 4 a schematic representation of a further measurement system, and
Fig. 5 a schematic representation of a power cable with a measurement system.

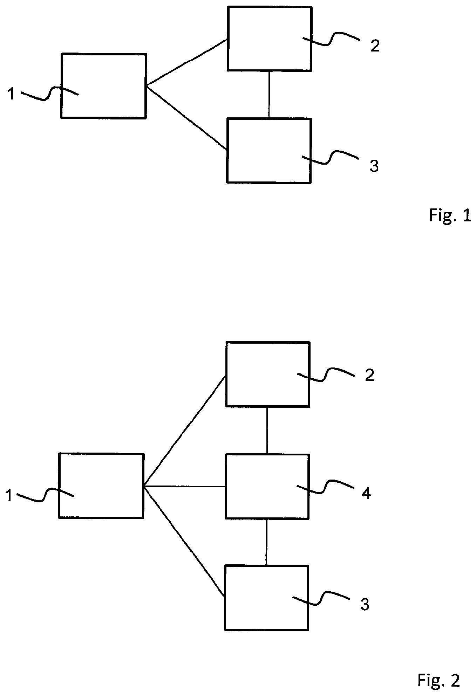

Fig. 1 shows a schematic representation of components of a measurement system. An energy harvesting unit 1 is connected to a sensor 2 (e.g. a temperature sensor) and a transmitting unit 3. Electrical energy is supplied by the energy harvesting unit to the sensor 2 and the transmitting unit 3. Measurement values determined by the sensor 2 are transmitted by the transmitting unit 3 to a receiver (not shown).

Fig. 2 shows components of another embodiment of the measurement system. In addition to Fig. 1, the system comprises a processor 4 which converts the measurements values of the sensor 2 before they are transmitted by the transmitting unit 3. The processor 4 is also supplied with electrical energy by the energy harvesting unit 1.

The measurement systems shown in Fig. 1 and 2 may be surrounded by a housing (not shown).

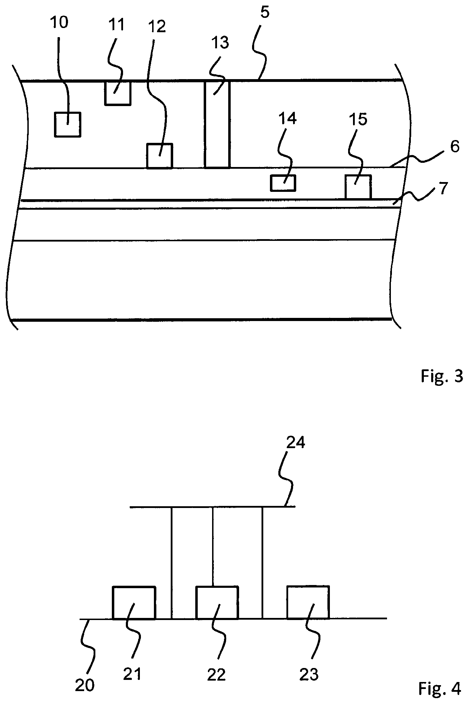

Fig. 3 shows a schematic representation of a power cable comprising a jacket 5, a shield 6 and a conductor 7. Several arrangements of measurement systems integrated in the cable are shown. The measurement system can be arranged between the shield 6 and the jacket 5 (position 10). The measurement system may be arranged on a top end of the jacket 5 such that an outer surface of the system finishes with an outer surface of the jacket 5 (position 11). Alternatively, the measurement system can be arranged directly on and in contact with the shield 6 (position 12). In another embodiment, the measurement system is arranged on the shield 6 such that the outer surface of the system finishes with the outer surface of the jacket 5 (position 13). The measurement system may also be arranged inside the shield 6. Position 14 shows an embodiment, where the measurement system is arranged between the shield 6 and the conductor 7. Finally, the measurement system can be arranged directly on and in contact with the conductor 7 (position 15).

In Fig. 4, an embodiment of the measurement system is shown. An energy harvesting unit 22, a sensor 21, and a transmitting unit 23 are arranged on a base plate 20. Above the base plate, a heat conductor 24 is arranged. The heat conductor 24 is connected to the base plate 20 and the energy harvesting unit 22. The energy harvesting unit 22 converts a temperature difference between the base plate 20 and the heat conductor 24 in electrical energy.

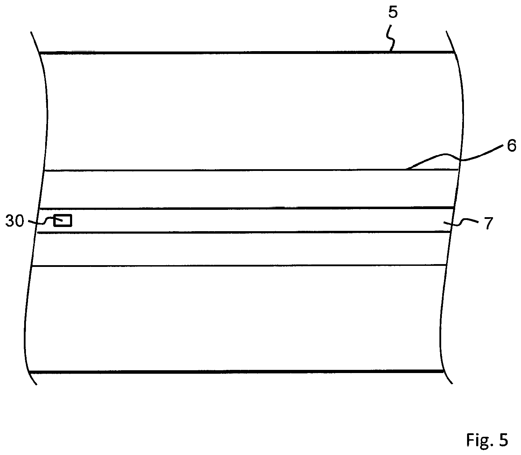

Fig. 5 shows a power cable, wherein the measurement system 30 is arranged in the conductor 7. The measurement system 30 may be surrounded by a closed housing.

The features disclosed in the specification, the claims and the figures can be relevant for the implementation of embodiments either alone or in any combination with each other.

## Claims

1. An arrangement comprising a power cable and a measurement system, wherein the measurement system comprises:
- an energy harvesting unit (1, 22) which is adapted to generate electrical energy,
- a sensor (2, 21) for determining a measurement value,
- a transmitting unit (3, 23) which is adapted to transmit the measurement value to a receiver,
- a base plate (20) on which the energy harvesting unit (1, 22), the sensor (2, 21) and the transmitting unit (3, 23) are arranged, and
- a heat conductor (24) which is arranged above the base plate (20),
wherein
- the sensor (2, 21) and the transmitting unit (3, 23) are coupled to the energy harvesting unit (1, 22),
- the power cable comprises a conductor (7) which is surrounded by a shield (6), and wherein the conductor (7) and the shield (6) are surrounded by a jacket (5), and
- the measurement system is integrated in the power cable.

2. The arrangement of claim 1, wherein the measurement system is arranged between the shield (6) and an outer surface of the jacket (5).

3. The arrangement of claim 2, wherein the measurement system is arranged directly on the shield (6).

4. The arrangement of claim 2 or 3, wherein the measurement system is arranged such that an outer surface of the measurement system finishes with the outer surface of the jacket (5).

5. The arrangement of claim 1, wherein the measurement system is arranged between the conductor (7) and the shield (6).

6. The arrangement of claim 5, wherein the measurement system is arranged directly on the conductor (7).

7. The arrangement of claim 1, wherein the measurement system is arranged in the conductor (7).

8. The arrangement of one of the claims 5 to 7, wherein the measurement system is surrounded by a closed housing.

9. A method for determining a measurement value for a power cable, comprising steps of:
- providing a power cable, comprising a conductor (7) which is surrounded by a shield (6), wherein the conductor (7) and the shield (6) are surrounded by a jacket (5),
- providing a measurement system which comprises:
- an energy harvesting unit (1, 22) which is adapted to convert thermal energy to electrical energy,
- a sensor (2, 21) for determining a measurement value,
- a transmitting unit (3, 23) which is adapted to transmit the measurement value to a receiver, wherein the sensor (2, 21) and the transmitting unit (3, 23) are coupled to the energy harvesting unit (1, 22),
- a base plate (20) on which the energy harvesting unit (1, 22), the sensor (2, 21) and the transmitting unit (3, 23) are arranged, and
- a heat conductor (24) which is arranged above the base plate (20),
- arranging the measurement system such that it is integrated in the power cable, and
- measuring, by the measurement system, a measurement value of the power cable.

## Patentansprüche

1. Anordnung, umfassend ein Stromkabel und ein Messsystem, wobei das Messsystem umfasst:
- eine Energy-Harvesting-Einheit (1, 22), die dazu eingerichtet ist, elektrische Energie zu erzeugen,
- einen Sensor (2, 21) zum Bestimmen eines Messwerts,
- eine Sendeeinheit (3, 23), die dazu eingerichtet ist, den Messwert an einen Empfänger zu senden,
- eine Grundplatte (20), auf der die Energy-Harvesting-Einheit (1, 22), der Sensor (2, 21) und die Sendeeinheit (3, 23) angeordnet sind, und
- einen Wärmeleiter (24), der oberhalb der Grundplatte (20) angeordnet ist,
wobei
- der Sensor (2, 21) und die Sendeeinheit (3, 23) mit der Energy-Harvesting-Einheit (1, 22) gekoppelt sind,
- das Stromkabel einen Leiter (7) umfasst, der von einer Abschirmung (6) umgeben ist, und wobei der Leiter (7) und die Abschirmung (6) von einem Mantel (5) umgeben sind, und
- das Messsystem in das Stromkabel integriert ist.

2. Anordnung nach Anspruch 1, wobei das Messsystem zwischen der Abschirmung (6) und einer Außenfläche des Mantels (5) angeordnet ist.

3. Anordnung nach Anspruch 2, wobei das Messsystem direkt auf der Abschirmung (6) angeordnet ist.

4. Anordnung nach Anspruch 2 oder 3, wobei das Messsystem so angeordnet ist, dass eine Außenfläche des Messsystems mit der Außenfläche des Mantels (5) abschließt.

5. Anordnung nach Anspruch 1, wobei das Messsystem zwischen dem Leiter (7) und der Abschirmung (6) angeordnet ist.

6. Anordnung nach Anspruch 5, wobei das Messsystem direkt auf dem Leiter (7) angeordnet ist.

7. Anordnung nach Anspruch 1, wobei das Messsystem im Leiter (7) angeordnet ist.

8. Anordnung nach einem der Ansprüche 5 bis 7, wobei das Messsystem von einem geschlossenen Gehäuse umgeben ist.

9. Verfahren zum Bestimmen eines Messwerts für ein Stromkabel, umfassend die Schritte:
- Bereitstellen eines Stromkabels, umfassend einen Leiter (7), der von einer Abschirmung (6) umgeben ist, wobei der Leiter (7) und die Abschirmung (6) von einem Mantel (5) umgeben sind,
- Bereitstellen eines Messsystems, das umfasst:
- eine Energy-Harvesting-Einheit (1, 22), die dazu eingerichtet ist, thermische Energie in elektrische Energie umzuwandeln,
- einen Sensor (2, 21) zum Bestimmen eines Messwerts,
- eine Sendeeinheit (3, 23), die dazu eingerichtet ist, den Messwert an einen Empfänger zu senden, wobei der Sensor (2, 21) und die Sendeeinheit (3, 23) mit der Energy-Harvesting-Einheit (1, 22) gekoppelt sind,
- eine Grundplatte (20), auf der die Energy-Harvesting-Einheit (1, 22), der Sensor (2, 21) und die Sendeeinheit (3, 23) angeordnet sind, und
- einen Wärmeleiter (24), der oberhalb der Grundplatte (20) angeordnet ist,
- Anordnen des Messsystems derart, dass es in das Stromkabel integriert ist, und
- Messen eines Messwerts des Stromkabels durch das Messsystem.

## Revendications

1. Agencement comprenant un câble d'alimentation et un système de mesure, dans lequel le système de mesure comprend :
- une unité de récupération d'énergie (1, 22) qui est adaptée pour générer de l'énergie électrique,
- un capteur (2, 21) pour déterminer une valeur de mesure,
- une unité de transmission (3, 23) qui est adaptée pour transmettre la valeur de mesure à un récepteur,
- une plaque de base (20) sur laquelle l'unité de récupération d'énergie (1, 22), le capteur (2, 21) et l'unité de transmission (3, 23) sont disposées et
- un conducteur de chaleur (24) qui est disposé au-dessus de la plaque de base (20), dans lequel
- le capteur (2, 21) et l'unité de transmission (3, 23) sont couplés à l'unité de récupération d'énergie (1, 22),
- le câble d'alimentation comprend un conducteur (7) qui est entouré d'un blindage (6), et dans lequel le conducteur (7) et le blindage (6) sont entourés d'une chemise (5), et
- le système de mesure est intégré dans le câble d'alimentation.

2. Agencement selon la revendication 1, dans lequel le système de mesure est agencé entre le blindage (6) et une surface extérieure de la chemise (5).

3. Agencement selon la revendication 2, dans lequel le système de mesure est disposé directement sur le blindage (6).

4. Agencement selon la revendication 2 ou 3, dans lequel le système de mesure est agencé de sorte qu'une surface extérieure du système de mesure se termine avec la surface extérieure de la chemise (5).

5. Agencement selon la revendication 1, dans lequel le système de mesure est agencé entre le conducteur (7) et le blindage (6).

6. Agencement selon la revendication 5, dans lequel le système de mesure est disposé directement sur le conducteur (7).

7. Agencement selon la revendication 1, dans lequel le système de mesure est agencé dans le conducteur (7).

8. Agencement selon une des revendications 5 à 7, dans lequel le système de mesure est entouré d'un boîtier fermé.

9. Procédé de détermination d'une valeur de mesure pour un câble d'alimentation, comprenant les étapes consistant à :
- fournir un câble d'alimentation, comprenant un conducteur (7) qui est entouré d'un blindage (6), dans lequel le conducteur (7) et le blindage (6) sont entourés d'une chemise (5),
- fournir un système de mesure qui comprend :
- une unité de récupération d'énergie (1, 22) qui est conçue pour convertir l'énergie thermique en énergie électrique,
- un capteur (2, 21) pour déterminer une valeur de mesure,
- une unité de transmission (3, 23) qui est adaptée pour transmettre la valeur de mesure à un récepteur, dans lequel le capteur (2, 21) et l'unité de transmission (3, 23) sont couplées à l'unité de récupération d'énergie (1, 22),
- une plaque de base (20) sur laquelle l'unité de récupération d'énergie (1, 22), le capteur (2, 21) et l'unité de transmission (3, 23) sont disposés, et
- un conducteur de chaleur (24) qui est disposé au-dessus de la plaque de base (20),
- agencer le système de mesure de sorte qu'il soit intégré dans le câble d'alimentation, et
- mesurer, par le système de mesure, une valeur de mesure du câble d'alimentation.
